# EUROPÄISCHE PATENTSCHRIFT

(11) **EP 1 179 916 B1**
(45) Veröffentlichungstag und Bekanntmachung des Hinweises auf die Patenterteilung: **30.08.2006**
(21) Anmeldenummer: 00117097.6
(22) Anmeldetag: 09.08.2000
(51) Int. Cl.: H04L 12/26

(54) **Vorrichtung zum Analysieren von digitalen Daten**
Apparatus for analysing digital data
Appareil pour analyser des données digitales

(43) Veröffentlichungstag der Anmeldung: 13.02.2002
(73) Patentinhaber: Tektronix Berlin GmbH & Co. KG, 13629 Berlin (DE)
(72) Erfinder: Gernhardt, Birger, 03042 Cottbus (DE)
(74) Vertreter: Schurack, Eduard F.

(56) Entgegenhaltungen:
- US-A- 6 000 041
- A.S. TANENBAUM: "Structured Computer Organization" 1999 XP002161799 020435 * Seite 203, Zeile 1 - Seite 207, Zeile 24 * * Seite 209, Zeile 11 - Seite 217, Zeile 7 *

## Beschreibung

Die vorliegende Erfindung betrifft eine Vorrichtung zum Analysieren von digitalen Daten, die gemäß einem Kommunikationsprotokoll formuliert sind.

Insbesondere in der Protokollmeßtechnik nimmt die Kodierung, Dekodierung und Analyse von digitalen Daten eine zentrale Rolle ein. Dabei werden sogenannte Protokolldateneinheiten (Protocol Data Units, PDUs) durch Computersoftware untersucht und die darin enthaltenen Informationen extrahiert. Aufgrund der großen Vielfalt an Protokolltypen und Sonderfällen existieren entsprechend viele Varianten von hierzu benötigter Decoder-Software. Die Decoder-Software spiegelt hierbei den spezifischen Aufbau eines Protokolls wieder. Sie enthält Elemente, die durch Auswertung der in einer PDU befindlichen Daten den Programmablauf steuern und einen Decoder-Output generieren. Insbesondere sucht die Software sequentiell nach Parametern in einer vorgegebenen PDU, um diese eindeutig zu identifizieren und Inhalte zu qualifizieren. Ein Decoder-Output wird aus den in den PDUs enthaltenen Daten und aus im Speicher befindlichen Programmdaten generiert.

Der Nachteil dieses aus dem Stand der Technik bekannten Verfahrens besteht darin, daß die Abarbeitung der Programme zur Protokolldekodierung sehr zeitintensiv ist, da unabhängig von der gewählten Prozessorplattform eine sehr große Anzahl von Befehlszyklen abgearbeitet werden muß. Dabei werden die zu dekodierenden Protokollelemente aus dem Arbeitsspeicher in die Prozessorregister geladen. Der universelle Datenpfad des Prozessors und der damit zur Verfügung stehende Befehlsvorrat erlaubt die Manipulation dieser Protokolldaten. Dekodierergebnisse werden entsprechend auch über Prozessorbefehle in den Zielbereich des Arbeitsspeichers bewegt. Aufgrund der anfallenden Datenmenge und der erforderlichen hohen Verarbeitungsgeschwindigkeit ist eine PDU-Dekodierung in Echtzeit mittels Software-Decoder nicht möglich. Die Programmabarbeitung ist aufgrund der notwendigen Speicheroperationen und Bitmanipulationen gemessen an der Anzahl der zu bearbeitenden Parameter für diesen Zweck zu langsam.

Die Aufgabe der vorliegenden Erfindung besteht darin, eine Vorrichtung bzw. ein Verfahren zum Analysieren von digitalen Daten, die gemäß einem Kommunikationsprotokoll formuliert sind, zur Verfügung zu stellen, welches eine höhere Verarbeitungsgeschwindigkeit als das aus dem Stand der Technik bekannte Verfahren ermöglicht.

Diese Aufgabe wird gelöst durch eine Vorrichtung mit den Merkmalen von Patentanspruch 1 und ein Verfahren mit den Merkmalen von Patentanspruch 10.

Der Erfindung liegt die Idee zugrunde, durch die Benutzung eines Hardware-Decoders für die Analyse digitaler Daten, insbesondere die Dekodierung von Protokolldaten, eine Performancesteigerung gegenüber einer reinen Software-Variante zu ermöglichen.

Die Besonderheit der erfindungsgemäßen Idee liegt in der Realisierung als Mikrosequenzer-Architektur. Damit ist es möglich, Protokolldaten innerhalb eines Systemtaktes zu dekodieren und den zugehörigen Output zu generieren. Eine derartige Hardware kann universell konfiguriert werden, so daß PDUs verschiedener Protokolltypen dekodiert werden können.

Bei einer besonders bevorzugten Ausführungsform enthält die erste und die zweite Adressierungseinheit jeweils mindestens einen Zähler, der bei der Ermittlung der Adressen entsprechend dem Inhalt des Datenregisters und/oder Mikrocoderegisters veränderbar ist. Hierdurch wird ermöglicht, daß in Abhängigkeit der jeweiligen Registerinhalte unmittelbar zu Folgeadressen in dem entsprechenden Speicher gesprungen werden kann.

Bevorzugt ist das Datenregister so ausgelegt, daß sein Inhalt ausgerichtet oder verschoben werden kann. Hierdurch wird ermöglicht, daß auch Daten in PDUs, die sich über zwei Adressen erstrecken, beispielsweise vom Ende einer ersten Adresse zum Beginn einer zweiten Adresse, zuverlässig analysiert werden können.

Die erfindungsgemäße Vorrichtung kann weiterhin einen Registerblock mit mindestens einem Register und mindestens einem Zähler enthalten, deren Inhalt bei der Ermittlung der entsprechenden Adressen des Datenregisters und/oder des Mikrocoderegisters berücksichtigbar sind, wobei das mindestens eine Register und der mindestens eine Zähler dazu verwendbar sind, für die Adressen maßgebliche Inhalte des Datenregisters und/oder des Mikrocoderegisters vorausgehender Zeitpunkte zu berücksichtigen. Wenn sich beispielsweise eine PDU über mehrere Adressen erstreckt und der gesuchte Parameter bereits gefunden wurde, kann, sofern in einem derartigen Registerblock die Länge der entsprechenden PDU abgelegt wird, unmittelbar auf die interessierende Folgeadresse gesprungen werden, die beispielsweise den Beginn der nächsten PDU anzeigt.

Die Vorrichtung kann weiterhin eine dritte Adressierungseinheit für den Ausgabespeicher umfassen, wobei die Adresse der dritten Adressierungseinheit unter Berücksichtigung des Inhalts des Mikrocoderegisters veränderbar ist. Diese Variante ermöglicht, daß die Ergebnisse nicht nur seriell in einen Ausgabespeicher eingeschrieben werden können, sondern bereits in einer für die Weiterverarbeitung besonders vorteilhaften Form, beispielsweise zunächst eine Auflistung der gefundenen Parameteridentifizierer, dann eine Auflistung der zugehörigen Parameterwerte.

Für den Fall, daß der Inhalt des Ausgabespeichers schrittweise aktualisiert wird, insbesondere bereits vorhandene Zeileneinträge im Hinblick auf neue Analyseergebnisse aktualisiert werden, ist es besonders vorteilhaft, wenn die erfindungsgemäße Vorrichtung weiterhin eine Logikschaltung umfaßt, mit der ein Eintrag desAusgabespeichers auslesbar, zur Berücksichtigung des neuen Ergebnisses veränderbar und in den Ausgabespeicher zurückschreibbar ist.

Für den Start einer Analyse, bei dem gegebenenfalls ein übergeordnetes System die Einsprungadresse in das im Mikrocodespeicher abgelegte Mikroprogramm vorgibt, ist es besonders vorteilhaft, wenn die erste, zweite und/oder dritte Adressierungseinheit derart ausgelegt sind, daß eine Startadresse in sie geladen werden kann.

Für den bevorzugten Anwendungsfall, daß die zu analysierenden digitalen Daten Protokolldateneinheiten sind, die Parameter enthalten, sind die in den Ausgabespeicher einzutragenden Ergebnisse, insbesondere Parameteridentifizierer und zugehörige Parameterwerte.

Bei einer besonders kostengünstigen Realisierung sind mindestens zwei der drei erwähnten Speicher, d.h. Datenspeicher, Mikrocodespeicher und Ausgabespeicher, in einen Speicher zusammengefaßt. Entsprechendes gilt für die zugehörigen Adressierungseinheiten.

Weitere vorteilhafte Ausführungsformen sind in den Unteransprüchen definiert. Im Nachfolgenden wird nunmehr ein Ausführungsbeispiel unter Hinweis auf die beigefügten Zeichnungen näher beschrieben. Es stellen dar:
- Fig. 1: eine aus dem Stand der Technik bekannte Mikrosequenzer-Architektur,
- Fig. 2: eine erfindungsgemäße Vorrichtung zur Analyse digitaler Daten und
- Fig. 3: ein Beispiel für das Überführen von Protokollregeln in ein Mikroprogramm.

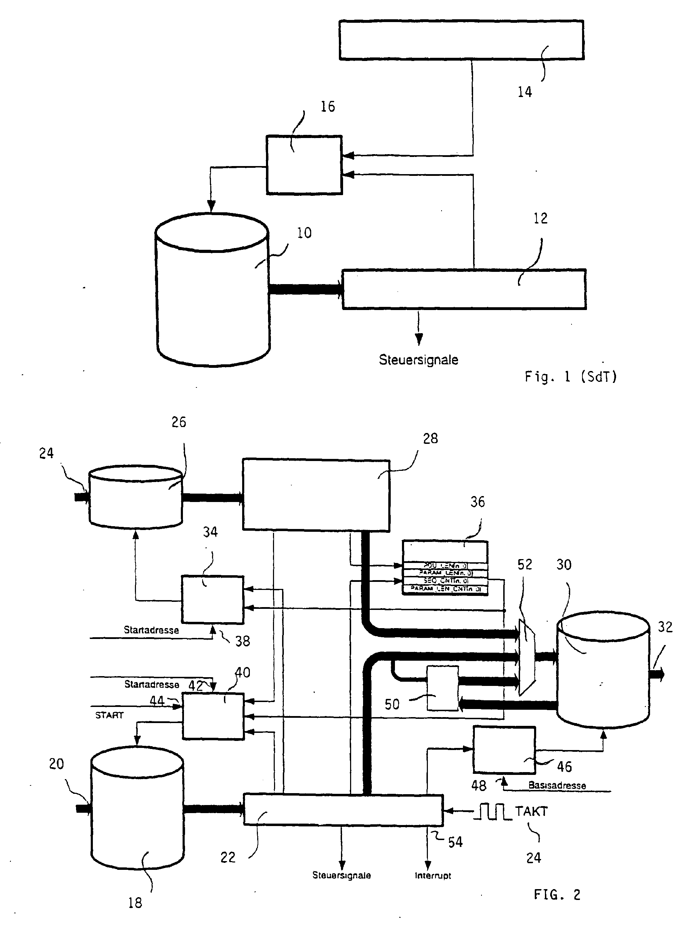

Fig. 1 zeigt einen aus dem Stand der Technik bekannten Standard-Mikrosequenzer, wie er in Steuerwerken von Zentralen Prozessoreinheiten(Central Processing Units, CPUs) vorkommt. Er umfasst als charakteristische Komponenten einen Mikroprogrammspeicher 10, ein Steuerregister 12, einen Befehlsdekoder 14 sowie eine Adressierungslogik 16. Zentrale Komponente ist hierbei der Mikroprogrammspeicher 10, der Informationen zur Ableitung von Steuersignalen für den Datenpfad, d.h. alle Ressourcen zur Programmabarbeitung in der CPU beinhaltet. Außerdem sind im Mikroprogrammspeicher 10 Steuersignale bzw. Daten für die Folgeadressierung enthalten. Im Betrieb ist zunächst im Steuerregister 12 ein Steuersignal aktiv, welches eine Adresse vom Befehlsdekoder 14 als Einsprungadresse in das Mikroprogramm, d.h. eine Adresse im Mikroprogrammspeicher 10 auswählt. Von dieser Adresse wird eine Zeile aus dem Mikroprogrammspeicher 10 in das Steuerregister 12 geladen. Die nächste Adresse im Mikroprogramm kann nunmehr beispielsweise direkt aus den neuen, im Steuerregister 12 enthaltenen Steuersignalen bzw. Folgeadressinformationen ermittelt werden. Alternativ kann die aktuelle Adresse inkrementiert werden, jeweils abhängig von den im Steuerregister 12 geladenen Steuersignalen für die Folgeadressbestimmung.

Ausgehend von der in Fig. 1 dargestellten allgemeinen Architektur eines Mikrosequenzers umfaßt die erfindungsgemäße Vorrichtung zur Analyse digitaler Daten weitere Komponenten, wie im Nachfolgenden im Zusammenhang mit Fig. 2 beschrieben wird. Das nachfolgende Ausführungsbeispiel beschreibt die Erfindung am Beispiel der Protokolldekodierung; die Erfindung ist jedoch keinesfalls auf diesen Anwendungszweck beschränkt. Im Hinblick auf diesen bevorzugten Anwendungsfall enthält in einem nunmehr mit Mikrocodespeicher 18 bezeichneten Mikroprogrammspeicher das Mikroprogramm Informationen zu mindestens einem zu dekodierenden Kommunikationsprotokoll. Insbesondere ist hier der das Protokoll beschreibende Regelbaum als Mikrocode im Mikrocodespeicher 18 repräsentiert. Der Mikrocodespeicher 18 kann über einen Eingang 20 beispielsweise mit anderen Protokollen bzw. mit weiteren benötigten Teilen eines nicht vollständig geladenen Protokolls nachgeladen werden. Auf diesen Mikrocodespeicher 18 erfolgen nur Lesezugriffe. Der Inhalt des Steuerregisters 22 kann mit einem Takt 24 neu geladen werden. Die zu analysierenden Protokolldateneinheiten werden über einen Eingang 24 in einen Datenspeicher 26 geladen. Von dort werden sie zur Analyse in ein Datenregister 28 geladen. Das Datenregister 28 ist im Hinblick darauf, daß die zu analysierenden Daten sich über zwei Adresszeilen hinweg im Datenspeicher 26 befinden können, dafür ausgelegt, die eingelesenen Daten zu verschieben und auszurichten. Auf den Datenspeicher 24 folgen ebenfalls nur Lesezugriffe. Die Analyseergebnisse werden in einen Ausgabespeicher 30 eingetragen, der an einem Ausgang 32 die Ergebnisse für weiterverarbeitende Einheiten bereitstellt. Ein Registerblock 36 umfaßt mehrere Register und Zähler deren Inhalt Auswirkungen auf Folgeadressen im Datenspeicher und/oder Mikrocodespeicher 18 hat. Beispielsweise kann ein Register PDU_LEN die Länge einer gerade im Datenregister 28 analysierten PDU bzw. eines Teils davon enthalten, so daß nach Auffinden des gesuchten Parameters in Kenntnis der Länge der PDU unmittelbar die nächste PDU aus dem Datenspeicher 26 ausgelesen werden kann. In ähnlicher Weise kann ein Register PARAM_LEN dazu dienen, bei Auffinden eines Parameters unmittelbar, sofern dies aus dem Parameter hervorgeht, zum nächsten Parameter zu springen, während beispielsweise ein Register SEQ_CNT dazu dienen kann, die Adressen um vorgegebene Werte zu erhöhen oder zu verringern.

Eine erste Adressierungseinheit 34 dient der Adressierung des Datenspeichers 26. Sie erhält als Eingangssignal Steuersignale des Mikrocoderegisters 22 sowie des Registerblocks 36. Ein Eingang 38 dient der Eingabe einer Startadresse. Eine zweite Adressierungseinheit 40 dient der Adressierung des Mikrocodespeichers 18. Sie erhält als Eingangssignal Steuersignale des Datenregisters 28, des Registerblocks 36 sowie des Mikrocoderegisters 22. Sie umfaßt weiterhin einen Eingang 42 zur Eingabe einer Startadresse und einen Eingang 44 zur Eingabe eines Startsignals. Eine dritte Adressierungseinheit 46 dient der Adressierung des Ausgabespeichers 30 und erhält als Eingangssignal ein Steuersignal des Mikrocoderegisters 22. Sie verfügt weiterhin über einen Eingang 48, an dem eine Basisadresse eingegeben werden kann, bei dem die Abspeicherung der Analyseergebnisse beginnen soll.

Die Vorrichtung umfaßt weiterhin eine Logikschaltung 50 und einen Ausgangsmultiplexer 52, deren Funktion im Nachfolgenden noch beschrieben wird.

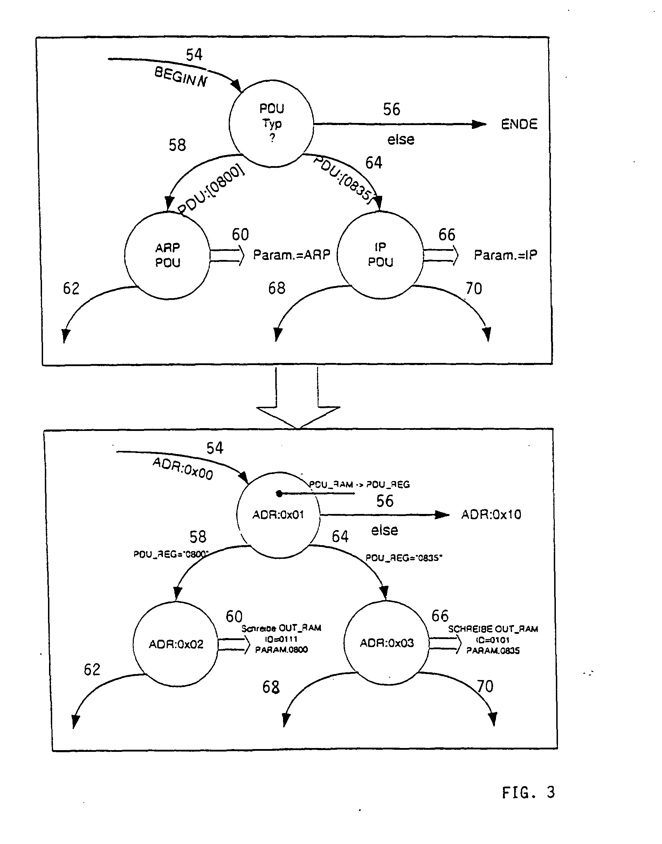

Fig. 3 zeigt beispielhaft, wie Protokollregeln in ein Mikroprogramm übergeführt werden können. Die obere Hälfte von Fig. 3 stellt hierbei den umzusetzenden Regelbaum dar, während die untere Hälfte die Entsprechung als Mikroprogramm zeigt. Im Regelbaum stellt sich zum Beispiel nach dem Einsprung im Schritt 54 über eine Startaufforderung "Beginn" die Frage, um welchen PDU-Typ es sich handelt. Von Interesse sind hier insbesondere zwei PDU-Typen, so daß, sofern keiner von beiden vorliegt, die Analyse im Schritt 56 beendet wird. Sofern die PDU: [0800] gefunden wird, siehe Schritt 58, steht fest, daß es sich um eine PDU vom Typ ARP handelt. Der ebenfalls als Parameter ermittelte PDU-Typ liefert als Ergebnis ARP, siehe Schritt 60. Nach Kenntnis des PDU-Typs wird die PDU im Folgeschritt 62 auf das Vorhandensein anderer Parameter geprüft und, sofern diese gefunden werden, deren Wert ermittelt. Im Fall, daß es sich um eine PDU: [0835] handelt, siehe Schritt 64, steht fest, daß es sich um eine PDU vom Typ IP handelt, weshalb der PDU-Typ-Parameter im Schritt 66 zu IP bestimmt wird. Je nach den Analysekriterien kann es nunmehr von Interesse sein, im Schritt 68 weitere PDU-Parameter, insbesondere auch deren Werte zu ermitteln. Es kann allerdings auch von Interesse sein, siehe Schritt 70, die nächste PDU zu analysieren.

In der in Fig. 3 in der unteren Hälfte dargestellten Mikroprogrammrealisierung sind entsprechende Schritte mit entsprechenden Bezugszeichen bezeichnet. Das unterliegende Grundprinzip besteht darin, daß Zuständen im Regelbaum Adressen im Mikrocodespeicher zugewiesen werden. So erfolgt der Einsprung in die Analyse über die Adresse ADR:0x00, die Untersuchung, um welchen PDU-Typ es sich handelt, erfolgt auf der Adresse ADR:0x01. Sofern keiner der interessierenden PDU-Typen vorliegt, findet das Programm auf der Adresse ADR:0x10 sein Ende, Schritt 56. Im Falle des Vorliegens eines PDU-Typs PDU:[0800] erfolgt die weitere Analyse auf der Adresse ADR:0x02, wobei der ermittelte Parameteridentifizierer ID = 0111 in den Ausgabespeicher eingetragen wird, ebenso wie der ermittelte Parameterwert PARAMETER = 800. Die Weiterverarbeitung im Schritt 62 erfolgt auf einer nächsten Folgeadresse. Der alternative Weg 64 führt zur Adresse ADR:0x03, die im Schritt 66 ebenfalls damit endet, daß in den Ausgabespeicher ein Parameteridentifizierer und ein Parameterwert eingetragen werden, während die weiterverarbeitenden Schritte 68, 70 über den Sprung zu weiteren Folgeadressen initiiert werden.

Nach dem Überführen des Regelbaums in ein Mikroprogramm wirken nunmehr die in Fig. 2 dargestellten Komponenten wie folgt zusammen:

Der Beginn einer Dekodierung wird über ein Signal "Start" am Eingang 44 der Adressierungseinheit 40 initiiert. Daraufhin werden Startadressen in die Adressierungseinheiten 34 und 40 geladen, optional eine Basisadresse in die Adressierungseinheit 46. Hierdurch erfährt die erfindungsgemäße Vorrichtung, auf welcher Adresse die zu analysierenden PDU-Daten im PDU-Datenspeicher beginnen und wo der Einsprung in den Mikrocode, der im Mikrocodespeicher 18 abgelegt ist, erfolgt. Aufgrund dieser Startadressen werden das Mikrocoderegister 22 und das Datenregister 28 erstmalig aus dem zugehörigen Speicher geladen. Den Daten im Datenregister 28 werden entsprechend des Mikrocodeabschnitts im Mikrocoderegister 22 Funktionen zugewiesen, beispielsweise, daß bestimmte Bits den PDU-Typ angeben, bestimmte Bits einen Parameter-Identifier und wiederum andere Bits einen Wert eines bestimmten Parameters. Das Ergebnis der Analyse wird über einen Ausgangsmultiplexer 52 in den Ausgabespeicher 30 eingetragen. Ermittelte Ergebnisse, die die Folgeadresse beeinflussen können, beispielsweise die Länge einer PDU, die Länge eines Parameters, vorgegebene Folgeadressprünge, werden im Registerblock 36 eingetragen. Anschließend wird unter Berücksichtigung des Inhalts des Registerblocks 36, des Mikrocoderegisters 22 und des Datenregisters 28 in den Adressierungseinheiten 34, 40 und 46 die entsprechende Folgeadresse ermittelt. Im Folgenden werden das Mikrocoderegister 22, sowie das Datenregister 28 im Hinblick auf die nunmehr aktuellen Adressen erneut aus dem Datenspeicher 26 bzw. dem Mikrocodespeicher 18 geladen. Es schließt sich ein weiterer Analyseschritt an, bei dem die Ergebnisse anschließend in den Ausgabespeicher 30 eingetragen werden und die aktuellen Folgeadressen der Adressierungseinheiten 34, 40 und 46 berechnet werden.

In der Ausführungsform von Fig. 2 erfolgt das Eintragen der Ergebnisse in den Ausgabespeicher 30 zeilenweise, wobei die Zeileninhalte nach und nach aufgefüllt werden. Hierzu werden bei Vorliegen eines neuen Ergebnisses bereits erfolgte Einträge aus dem Datenspeicher 30 ausgelesen, in der Logikschaltung 50 mit den neuen Ergebnissen verknüpft und anschließend über den Ausgangsmultiplexer 52 in den Ausgabespeicher 30 zurückgeschrieben.

Nach Beendigung der Analyse erfolgt ein Interrupt am Ausgang 54 des Mikrocoderegisters 22. Die Folgeadressierung zeigt nun fortwährend auf die aktuelle Adresse im Mikrocodespeicher 18. Damit bleibt das Steuersignal "Interrupt" am Ausgang 54 solange aktiv, bis durch ein Signal START am Eingang 44 eine neue Dekodierung eingeleitet wird.

Der Aufbau der Ergebnisse erfolgt im Hinblick auf eine Weiterverarbeitung bevorzugt in Form eines Indexfeldes, bei dem zunächst angegeben ist, ob ein entsprechender Parameter in der PDU vorhanden ist, und anschließend, sofern ein Parameter vorhanden ist, der entsprechende Parameterwert. Durch Inkrementieren der Adressierungseinheit 46 von PDU zu PDU um einen festen Wert kann ein Auslesen der interessierenden Daten aus dem Ausgabespeicher in sehr kurzer Zeit ermöglicht werden.

## Patentansprüche

1. Vorrichtung zum Analysieren von digitalen Daten, die gemäß einem Kommunikationsprotokoll formuliert sind, umfassend:
- einen Datenspeicher (26) zum Speichern der zu analysierenden digitalen Daten;
- einen Mikrocodespeicher (18) zum Speichern eines Mikrocodes, der zumindest einen Teil des Kommunikationsprotokolls repräsentiert;
- ein Datenregister (28) zum Auslesen einer vorbestimmten Anzahl von Bits aus dem Datenspeicher (26);
- ein Mikrocoderegister (22) zum Auslesen einer vorbestimmten Anzahl von Bits aus dem Mikrocodespeicher (18), wobei der Inhalt des Mikrocoderegisters (22) zur Analyse des Inhalts des Datenregisters (28) verwendbar ist;
- einem Ausgabespeicher (30), in den das Ergebnis der Analyse eintragbar ist;
- eine erste Adressierungseinheit (34) zur Adressierung des Datenspeichers (26);
- eine zweite Adressierungseinheit (40) zur Adressierung des Mikrocodespeichers (18), wobei die erste und die zweite Adressierungseinheit (34, 40) ausgelegt sind, bei der Ermittlung der entsprechenden Adressen den Inhalt des Datenregisters (28) und/oder des Mikrocoderegisters (22) zu berücksichtigen.

2. Vorrichtung nach Anspruch 1,
**dadurch gekennzeichnet,**
**daß** die erste und die zweite Adressierungseinheit (34, 40) jeweils mindestens einen Zähler enthalten, der bei der Ermittlung der Adressen entsprechend dem Inhalt des Datenregisters (28) und/oder Mikrocoderegisters (22) veränderbar ist.

3. Vorrichtung nach einem der Ansprüche 1 oder 2,
**dadurch gekennzeichnet,**
**daß** das Datenregister (28) ausgelegt ist, seinen Inhalt auszurichten und/oder zu verschieben.

4. Vorrichtung nach einem der vorhergehenden Ansprüche,
**dadurch gekennzeichnet,**
**daß** sie weiterhin einen Registerblock (36) mit mindestens einem Register und mindestens einem Zähler enthält, deren Inhalt bei der Ermittlung der entsprechenden Adressen des Datenregisters (28) und/oder des Mikrocoderegisters (22) berücksichtigbar ist, wobei das mindestens eine Register und der mindestens eine Zähler dazu verwendbar sind, für die Adressen maßgebliche Inhalte des Datenregisters (28) und/oder des Mikrocoderegisters (22) vorausgehender Zeitpunkte zu berücksichtigen.

5. Vorrichtung nach einem der vorhergehenden Ansprüche,
**dadurch gekennzeichnet,**
**daß** sie weiterhin eine dritte Adressierungseinheit (46) für den Ausgabespeicher (30) umfaßt, wobei die Adresse der dritten Adressierungseinheit (46) unter Berücksichtigung des Inhalts des Mikrocoderegisters (22) veränderbar ist.

6. Vorrichtung nach einem der vorhergehenden Ansprüche,
**dadurch gekennzeichnet,**
**daß** sie weiterhin eine Logikschaltung (50) umfaßt, mit der ein Eintrag im Ausgabespeicher (30) auslesbar, zur Berücksichtigung eines neuen Ergebnisses veränderbar und in den Ausgabespeicher (30) zurückschreibbar ist.

7. Vorrichtung nach einem der vorhergehenden Ansprüche,
**dadurch gekennzeichnet,**
**daß** in die erste, zweite und/oder dritte Adressierungseinheit (34, 40, 46) eine Startadresse ladbar ist.

8. Vorrichtung nach einem der vorhergehenden Ansprüche,
**dadurch gekennzeichnet,**
**daß** die zu analysierenden digitalen Daten Protokolldateneinheiten sind, die Parameter enthalten, und die in den Ausgabespeicher (30) eintragbaren Ergebnisse mindestens einen Parameteridentifizierer und mindestens einen Parameterwert umfassen.

9. Vorrichtung nach einem der vorhergehenden Ansprüche,
**dadurch gekennzeichnet,**
**daß** mindestens zwei der drei erwähnten Speicher - Datenspeicher (26), Microcodespeicher (18) und Ausgabespeicher (30) - in einen Speicher und die entsprechenden Adressierungseinheiten (34, 40, 46) in eine Adressierungseinheit zusammengefaßt sind.

10. Verfahren zum Analysieren digitaler Daten, die gemäß einem Kommunikationsprotokoll formuliert sind, folgende Schritte umfassend:
a) Laden der zu analysierenden Daten in einen Datenspeicher (26);
b) Laden eines Mikrocodes in einen Mikrocodespeicher (18), wobei der Mikrocode zumindest einen Teil des Kommunikationsprotokolls repräsentiert;
c) Auslesen einer vorbestimmten Anzahl von Bits aus dem Datenspeicher (26) in ein Datenregister (28) gemäß einer von einer ersten Adressierungseinheit (34) vorgegebenen Adresse;
d) Auslesen einer vorbestimmten Anzahl von Bits aus dem Mikrocodespeicher (18) in ein Mikrocoderegister (22) gemäß einer von einer zweiten Adressierungseinheit (40) vorgegebenen Adresse;
e) Zuweisen von Funktionen an die Daten im Datenregister (28) entsprechend des Mikrocodeabschnitts im Mikrocoderegister (22);
f) Eintragen von mindestens einem Ergebnis der Zuweisung in einen Ausgabespeicher (30);
g) Aktualisieren der Zählerstände der ersten und der zweiten Adressierungseinheit (34, 40) entsprechend dem Inhalt des Datenregisters und/oder des Mikrocoderegisters (22).

11. Verfahren nach Anspruch 10,
**dadurch gekennzeichnet,**
**daß** das Eintragen gemäß Schritt f) an einer Adresse stattfindet, die von einer dritten Adressierungseinheit (46) vorgegeben wird, wobei der Zählerstand der dritten Adressierungseinheit (46) entsprechend dem Inhalt des Datenregisters (28) und/oder des Mikrocoderegisters (22) aktualisiert wird.

12. Verfahren nach einem der Ansprüche 10 oder 11,
**dadurch gekennzeichnet,**
**daß** vor dem Eintragen gemäß Schritt f) ein unvollständiger Eintrag aus dem Ausgabespeicher (30) von einer Logikschaltung (50) ausgelesen und zur Berücksichtigung eines neuen Ergebnisses verändert und anschließend in den Ausgabespeicher (30) zurückgeschrieben wird.

13. Verfahren nach einem der vorhergehenden Ansprüche,
**dadurch gekennzeichnet,**
**daß** in einem weiteren Schritt ein Registerblock (36), der mindestens ein Register und mindestens einen Zähler enthält, mit Ergebnissen der Analyse geladen wird, die bei der Ermittlung der entsprechenden Adressen des Datenregisters (28) und/oder des Mikrocoderegisters (22) nachfolgender Zeitpunkte berücksichtigt werden.

## Claims

1. Device for analysing digital data formulated in accordance with a communication protocol, comprising:
- a data memory (26) for storing the digital data to be analysed;
- a microcode memory (18) for storing a microcode that represents at least part of the communication protocol;
- a data register (28) for reading out a pre-determined number of bits from the data memory (26);
- a microcode register (22) for reading out a pre-determined number of bits from the microcode memory (18), with the content of the microcode register (22) being usable for analysing the content of the data register (28);
- an output memory (30), into which the result of the analysis can be entered;
- a first addressing unit (34) for addressing the data memory (26);
- a second addressing unit (40) for addressing the microcode memory (18), with the first and the second addressing units (34, 40) being designed to take account of the content of the data register (28) and/or the microcode register (22) when the corresponding addresses are determined.

2. Device according to claim 1
**characterised in that**
the first and the second addressing units (34, 40) each contain at least one counter, which may be changed when the addresses in accordance with the content of the data register (28) and/or the microregister (22) are determined.

3. Device according to one of claims 1 or 2,
**characterised in that**
the data register (28) is designed to align and/or shift its content.

4. Device according to one of the above claims,
**characterised in that**
it furthermore contains a register block (36) with at least one register and at least one counter, the contents of which can be taken into account for determining the relevant addresses of the data register (28) and/or the microcode register (22), it being possible to use the at least one register and the at least one counter to take account of contents of the data register (28) and/or the microcode register (22) of preceding points in time, which are decisive for the addresses.

5. Device according to one of the above claims,
**characterised in that**
it furthermore comprises a third addressing unit (46) for the output memory (30), with the address of the third addressing unit (46) being changeable by taking the content of the microcode register (22) into account.

6. Device according to one of the above claims,
**characterised in that**
it furthermore comprises a logic circuit (50) with which an entry into the output memory (30) can be read out, changed to take account of a new result, and rewritten into the output memory (30).

7. Device according to one of the above claims,
**characterised in that**
a starting address can be loaded into the first and/or second and/or third addressing units (34, 40, 46).

8. Device according to one of the above claims,
**characterised in that**
the digital data to be analysed are protocol data units which contain parameters, and that the results which can be entered into the output memory (30) comprise at least one parameter identifier and at least one parameter value.

9. Device according to one of the above claims,
**characterised in that**
at least two of the three memories mentioned - the data memory (26), the microcode memory (18) and the output memory (30) - are combined in one memory, and the corresponding addressing units (34, 40, 46) are combined in one addressing unit.

10. Method for analysing digital data, formulated in accordance with a communication protocol, comprising the following steps:
a) loading the digital data to be analysed into a data memory (26);
b) loading a microcode into a microcode memory (18), with the microcode representing at least part of the communication protocol;
c) reading out a pre-determined number of bits from the data memory (26) into a data register (28) in accordance with an address specified by a first addressing unit (34);
d) reading out a pre-determined number of bits from the microcode memory (18) into a microcode register (22) in accordance with an address specified by a second addressing unit (40);
e) assigning functions to the data in the data register (28) according to the microcode section in the microcode register (22);
f) entering at least one result of the assignment in an output memory (30);
g) updating the counter readings of the first and second addressing units (34, 40) in accordance with the content of the data register and/or the microcode register (22).

11. Method according to claim 10,
**characterised in that**
the entry in accordance with step f) takes place at an address specified by a third addressing unit (46), with the counter reading of the third addressing unit (46) being updated in accordance with the content of the data register (28) and/or the microcode register (22).

12. Method according to claims 10 or 11,
**characterised in that**
prior to entry in accordance with step f), an incomplete entry is read out from the output memory (30) by a logic circuit (50) and changed to take account of a new result, and then rewritten into the output memory (30).

13. Method according to one of the above claims
**characterised in that**
in a further step, a register block (36), which contains at least one register and at least one counter, is loaded with the results of the analysis, which are taken into account when the corresponding addresses of the data register (28) and/or the microcode register (22) of subsequent points in time are determined.

## Revendications

1. Dispositif d'analyse de données numériques exprimées selon un protocole de communication, comprenant :
- une mémoire de données (26) pour stocker les données numériques à analyser ;
- une mémoire de microcode (18) pour stocker un microcode représentant au moins une partie du protocole de communication ;
- un registre de données (28) pour lire un nombre prédéterminé de bits de la mémoire de données (26) ;
- un registre de microcode (22) pour lire un nombre prédéterminé de bits de la mémoire de microcode (18), le contenu du registre de microcode (22) étant utilisable pour l'analyse du contenu du registre de données (28) ;
- une mémoire de sortie (30) dans laquelle il est possible d'inscrire le résultat de l'analyse ;
- une première unité d'adressage (34) pour adresser la mémoire de données (26) ;
- une deuxième unité d'adressage (40) pour adresser la mémoire de microcode (18), la première et la deuxième unité d'adressage (34, 40) étant prévues pour prendre en compte le contenu du registre de données (28) et/ou du registre de microcode (22) lors de la détermination des adresses correspondantes.

2. Dispositif selon la revendication 1,
**caractérisé en ce que**
la première et la deuxième unité d'adressage (34, 40) contiennent chacune au moins un compteur qui, à la détermination des adresses, peut être modifié en accord avec le contenu du registre de données (28) et/ou du registre de microcode (22).

3. Dispositif selon l'une quelconque des revendications 1 ou 2,
**caractérisé en ce que**
le registre de données (28) est prévu pour aligner et/ou décaler son contenu.

4. Dispositif selon l'une quelconque des revendications précédentes,
**caractérisé en ce que**
il contient, en outre, un bloc registre (36) comportant au moins un registre et au moins un compteur dont les contenus peuvent être pris en compte lors de la détermination des adresses correspondantes du registre de données (28) et/ou du registre de microcode (22), le au moins un registre et le au moins un compteur pouvant être utilisés pour prendre en compte des contenus déterminants du registre de données (28) et/ou du registre de microcode (22) d'instants précédents pour les adresses.

5. Dispositif selon l'une quelconque des revendications précédentes,
**caractérisé en ce que**
il comprend, en outre, une troisième unité d'adressage (46) pour la mémoire de sortie (30), l'adresse de la troisième unité d'adressage (46) pouvant être modifiée en tenant compte du contenu du registre de microcode (22).

6. Dispositif selon l'une quelconque des revendications précédentes,
**caractérisé en ce que**
il comprend, en outre, un circuit logique (50) avec lequel il est possible de lire un enregistrement dans la mémoire de sortie (30), le modifier pour tenir compte d'un nouveau résultat et le réécrire dans la mémoire de sortie (30).

7. Dispositif selon l'une quelconque des revendications précédentes,
**caractérisé en ce que**
il est possible de charger une adresse de début dans la première, la deuxième unité et/ou la troisième unité d'adressage (34, 40, 46).

8. Dispositif selon l'une quelconque des revendications précédentes,
**caractérisé en ce que**
les données numériques à analyser sont des unités de données de protocole qui contiennent des paramètres et que les résultats inscriptibles dans la mémoire de sortie (30) comprennent au moins un identificateur de paramètre et au moins une valeur de paramètre.

9. Dispositif selon l'une quelconque des revendications précédentes,
**caractérisé en ce que**
au moins deux des trois mémoires évoquées - mémoire de données (26), mémoire de microcode (18) et mémoire de sortie (30) - sont rassemblées dans une mémoire et les unités d'adressage correspondantes (34, 40, 46) dans une unité d'adressage.

10. Procédé d'analyse de données numériques exprimées selon un protocole de communication, comprenant les étapes suivantes :
a) charger les données à analyser dans une mémoire de données (26) ;
b) charger un microcode dans une mémoire de microcode (18), le microcode représentant au moins une partie du protocole de communication ;
c) lecture d'un nombre prédéterminé de bits de la mémoire de données (26) dans un registre de données (28) selon une adresse prescrite par une première unité d'adressage (34) ;
d) lecture d'un nombre prédéterminé de bits de la mémoire de microcode (18) dans un registre de microcode (22) selon une adresse prescrite par une deuxième unité d'adressage (40) ;
e) affectation de fonctions aux données du registre de données (28) selon la section de microcode dans le registre de microcode (22);
f) enregistrement dans une mémoire de sortie (30) d'au moins un résultat de l'affectation ;
g) mise à jour du contenu des compteurs de la première et de la deuxième unité d'adressage (34, 40) en fonction du résultat du registre de données et/ou du registre de microcode (22).

11. Procédé selon la revendication 10,
**caractérisé en ce que**
l'enregistrement selon l'étape f) s'effectue à une adresse de début prescrite par une troisième unité d'adressage (46), le contenu du compteur de la troisième unité d'adressage (46) étant mis à jour en fonction du contenu du registre de données (28) et/ou du registre de microcode (22).

12. Procédé selon l'une quelconque des revendications 10 ou 11,
**caractérisé en ce que**,
avant l'enregistrement selon l'étape f), un enregistrement incomplet est lu par un circuit logique (50) dans la mémoire de sortie (30), modifié pour tenir compte d'un nouveau résultat et ensuite réécrit dans la mémoire de sortie (30).

13. Procédé selon l'une quelconque des revendications précédentes,
**caractérisé en ce que**,
dans une autre étape, un bloc registre (36), qui contient au moins un registre et au moins un compteur, reçoit des résultats de l'analyse qui sont pris en compte lors de la détermination des adresses correspondantes du registre de données (28) et du registre de microcode (22) d'instants suivants.
